# EUROPEAN PATENT SPECIFICATION

(11) **EP 2 547 240 B1**
(45) Date of publication and mention of the grant of the patent: **26.12.2018**
(21) Application number: 11708854.2
(22) Date of filing: 16.03.2011
(51) Int. Cl.: A47J 31/36

(54) **A BEVERAGE MACHINE USING INGREDIENT CAPSULES**
GETRÄNKEMASCHINE MIT INHALTSSTOFFKAPSELN
MACHINE À BOISSON UTILISANT DES CAPSULES D'INGRÉDIENT

(30) Priority: 19.03.2010 EP 10290148
(43) Date of publication of application: 23.01.2013
(73) Proprietor: Nestec S.A., 1800 Vevey (CH)
(72) Inventor: MÖRI, Peter, CH-3272 Walperswil (CH)
(74) Representative: Sacroug, Olivier
(86) International application number: PCT/EP2011/053948
(87) International publication number: WO 2011/113854

(56) References cited:
- EP-A1- 0 512 470
- WO-A1-2008/046740
- WO-A1-2009/013777
- US-A- 3 403 617

## Description

The invention relates to a beverage machine using ingredient capsules containing food ingredients or substances for preparing a beverage or, to a larger extent, comestibles.

Machines using ingredient capsules are already known, for instance from WO2005/004683.

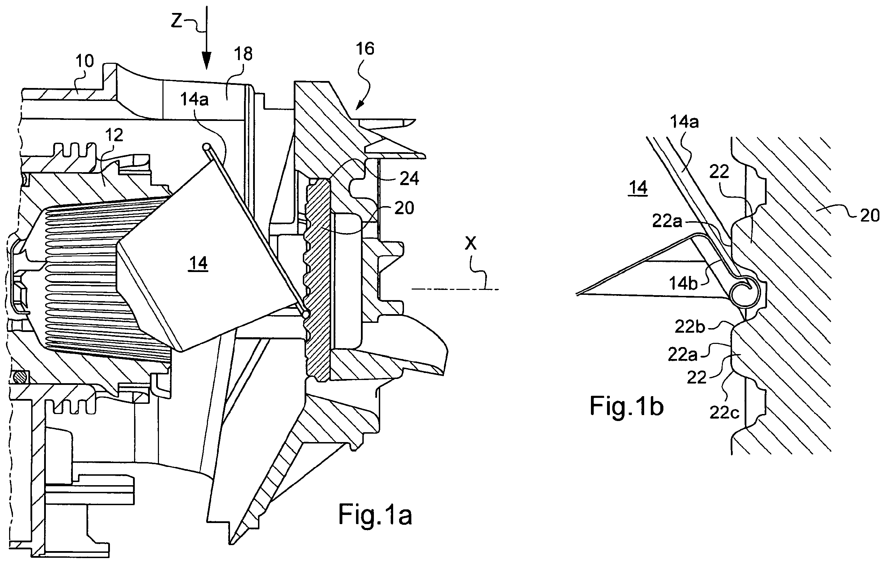

Figure 1a schematically represents a machine of this type comprising a casing 10 enclosing:
- a capsule cage 12 which is intended for receiving an ingredient capsule 14 therein, and
- a vertical capsule holder 16.

A passage 18 is provided on the top of the casing to enable vertical introduction of an ingredient capsule inside the machine.

The capsule cage 12 is movable along a longitudinal horizontal axis X between two positions. In a first position the capsule cage is spaced apart from the capsule holder and an ingredient capsule can be introduced from above between the capsule holder and the capsule cage.

More particularly, the ingredient capsule is inserted through the passage and guided along the direction of insertion Z thanks to side guiding rails not represented in Figure 1a. The capsule is maintained in an intermediate position between the capsule cage and the capsule holder through stops arranged in the two rails respectively.

In this intermediate position the ingredient capsule 14 is maintained slightly inclined by virtue of its center of gravity and is located slightly above the central axis of the vertical capsule holder.

When the capsule cage is further moved horizontally towards the capsule holder the ingredient capsule is urged to pass below the two stops so as to be pressed against the capsule holder along its central axis (second position). When the capsule cage moves backward the ingredient capsule falls by gravity in a lower collecting bin.

It is to be noted that an ingredient capsule 14 may be filled with ingredients such as roasted and grounded coffee and closed by a closing member such as a tear face cover 14a or membrane and/or filtering wall.

A lateral extension 14b of the capsule is formed from the side wall and thus forms a flange on which the closing member is fixed.

For preparing coffee beverage the tear face cover or membrane has to be torn when the ingredient capsule is located in the above-mentioned second position of the capsule cage and capsule holder.

An example of capsule holder is more particularly described in EP 0 512 470.

As described in EP 0 512 470 and represented in Figures 1a et 1b the capsule holder 16 comprises a plate 20 with relief surface element projecting members in the form of pyramids 22 and beverage evacuation orifices. The plate is accommodated in a seat 24 and is able to turn freely therein.

Each pyramid 22 has at its upper surface 22a four linear tear edges two of which only, 22b and 22c, being represented in profile in Figure 1b. The tear face cover of the capsule presses against these edges under pressure residing in the capsule and tears and the coffee beverage flows through the filtration orifices.

The Applicant has noticed that the ingredient capsule 14 when vertically inserted through the top passage 18 may abut through its flange 14b against the pyramid-shaped projecting members 22 and more particularly against the tear edges of these members that are horizontally arranged (see for example the horizontal tear edges 22b and 22c in Figure 1b).

This gives rise to a blockage of the ingredient capsule in an incorrect position as represented in Figures 1a and 1b.

Most often, the ingredient capsule abuts against the pyramid-shaped projecting members that are located in the lowest part of the plate and in the middle thereof as schematically represented in Figure 1a.

When such a blockage occurs and the capsule cage comes closer to the capsule holder during a closing movement of the machine, the incorrectly positioned ingredient capsule is crushed, thereby hindering complete closure of the machine.

The Applicant has remedied this drawback by providing the capsule cage with a non completely horizontal movement. A small inclined ramp disposed on the path of the capsule cage enables engagement of the ingredient capsule with the capsule cage at a higher location than previously.

This higher engagement makes it possible to reduce the risk of blockage arising from the abutment of an ingredient capsule against the pyramid-shaped projecting members.

However, this arrangement makes the movement of the capsule cage as well as the mechanism of the machine more complex.

There is now a need for a new machine which does not need any ramp for overcoming the above-mentioned blockage issue.

There is also a need for a new simplified machine remedying the above-mentioned blockage issue.

There is a further need for a new machine in which the moving part that is either a first part enclosing an ingredient capsule or a second part having a perforating function follows a rectilinear path.

The present invention provides a beverage machine as defined in claim 1. Preferred features of the invention are set out in the dependent claims.

Other aspects and features will be described in the course of the non limitative following description, given with reference to the accompanying drawings in which:
- Figures 1a and 1b schematically and partly illustrate the issue of trapping of an ingredient capsule during its insertion in a prior art existing beverage machine;
- Figures 2 to 4 schematically represent a longitudinal cross-section of a beverage machine according to the invention showing successive steps of the machine when operated;
- Figure 5 is a schematic top view of the capsule enclosing member represented in Figure 2;
- Figure 6 is a longitudinal cross-section of casing 32 represented in Figure 2 to 4;
- Figure 7 is a partial schematic view in perspective of perforating plate 74 assembled in second part 70;
- Figure 8 is a schematic front view of a perforating plate in a prior art existing beverage machine;
- Figure 9 is a schematic front view of a perforating plate oriented in accordance with the invention;
- Figure 10 is a back view showing a perforating plate provided with indents in perspective;
- Figure 11 is a back view showing a perforating plate and its supporting portion assembled in a superimposed manner;
- Figure 12 is a partial back view in perspective of a perforating plate assembled against its supporting portion and blocked in rotation.

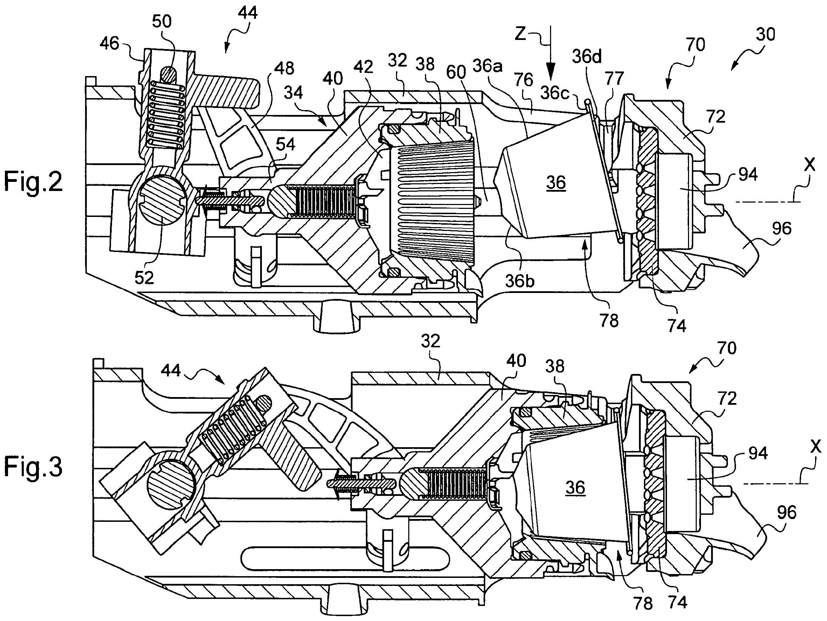

As schematically represented in Figures 2 to 4, a beverage machine 30 comprises a casing 32 enclosing several components.

A first part of the machine denoted 34 is intended for receiving an ingredient capsule therein.

An ingredient capsule 36, also called cartridge, is represented in the drawings under the shape of a container having walls, in particular a side wall 36a and a bottom wall 36b.

The side wall 36a defines at its end opposite to the bottom wall an aperture enabling filling of the container with ingredients.

Such ingredients may be coffee, e.g. roasted and grounded coffee.

However, other ingredients such as substances or products or mixtures of ingredients substances or products which are suitable for preparing fluid comestibles by addition of water may be accommodated in the container.

These other ingredients include, in a non limitative way, tea, soluble tea or soluble coffee, a mixture of ground coffee and soluble coffee, cocoa, or a cocoa or chocolate-based or supplemented product including coffee, or a soup, or of foods such as in the form of infusions, for example.

A flange 36c extends laterally and outwardly from side wall 36a and surrounds the capsule aperture.

A closing member 36d closes the aperture. The closing member rests against the flange 36c and is tightly sealed thereto so as to seal the filled capsule.

The closing member is for example a tear face cover or a membrane which is to be torn during the extraction process as will be seen subsequently.

Alternatively, the closing member may be a filtering wall or filter.

Also, the closing member may be a combination of some of the preceding elements (e.g. a tear face cover and a filtering wall disposed close to each other).

As represented in the drawings the ingredient capsule has an overall frusto-conical shape. However, other less preferred forms may be envisaged within the scope of the invention such as a cylindrical shape.

The first part 34 includes a piston part 38 of a capsule enclosing member 40 having a recess 42 for accommodating piston part 38 therein.

The mechanism of the capsule enclosing member or cage 40 is more particularly detailed in EP 2 068 684.

A mechanism 44 is provided in the machine for imparting a longitudinal displacement along an horizontal axis X to first part 34.

Briefly, mechanism 44 includes two pairs of articulated rods, only two of which 46 and 48 being represented in the drawings.

The rods are linked together and articulated through a pivot shaft 50.

Rod 46 is also linked to a shaft 52 which is able to rotate about itself when a lever (not represented in the drawings) connected to shaft 52 is actuated by a user.

Rod 48 is linked to a shaft (not represented in the drawings) that is connected to capsule enclosing member 40 and for instance to the basis 54 of capsule enclosing member 40.

Shaft 52 and the shaft to which rod 48 is linked are arranged in alignment along longitudinal axis X.

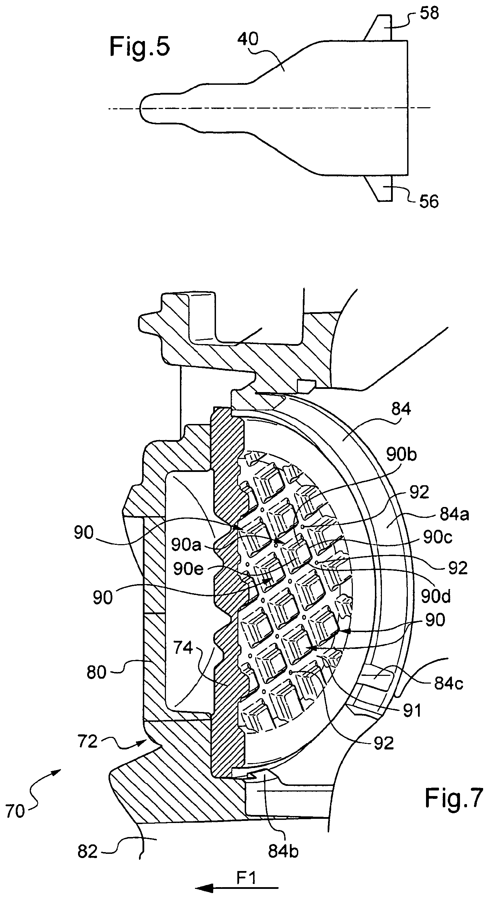

As schematically represented in Figure 5, capsule enclosing member 40 viewed from above is provided on its outer peripheral surface with two guiding members 56, 58 which are for instance two lugs. These members are disposed on opposite sides of body 40 and are engaged in two respective guiding slots provided in casing 32.

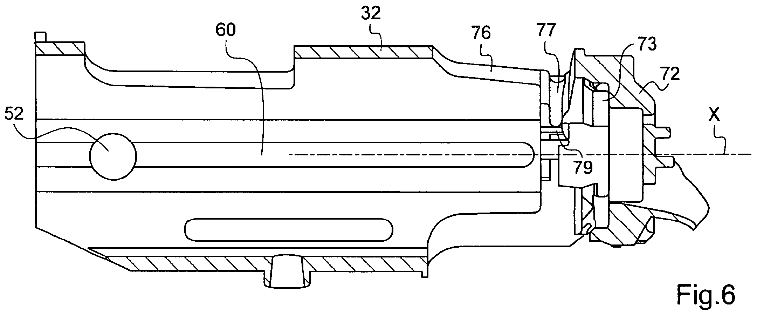

Figure 6 represents the inner side of casing 32, all the components in Figure 2 being removed therefrom except shaft 52.

Only one guiding slot 60 has been represented in this Figure, the other one (not represented in the drawings) being symmetrical with respect to a median plane containing longitudinal axis X.

Slot 60 (as well as the other symmetrical slot) has a longitudinal shape aligned with horizontal axis X and guiding member 56 is engaged in guiding slot 60 (as well as guiding member 58 in the other guiding slot).

When the lever is actuated by a user supporting body 40 and capsule cage 38 are moved along longitudinal axis X while guiding members 56 and 58 slide in the two guiding slots respectively (see Figure 3).

Further, the shaft (not represented in the drawings) to which rod 48 is linked is also engaged in slot 60 for guiding supporting body 40 on its rectilinear path.

The machine 30 further includes a second part 70, also called capsule holder, which is in a fixed position in this embodiment.

Second part 70 includes a capsule holding element 72 which defines a housing 73 (see Figure 6) for accommodating a perforating plate 74 against which the ingredient capsule is to be placed at the end of the movement of first part 34.

An opening 76 is provided at the top of the casing close to second part 70.

This opening enables introduction of an ingredient capsule in a part of the machine called brewing chamber 78 and which is located between first part 34 and second part 70.

The ingredient capsule 36 is inserted in the casing through opening 76 in a direction of insertion Z (vertical direction) that is perpendicular to displacement axis X.

The machine further includes two symmetrical guiding members, e.g. two guiding rails, which are arranged along the Z direction on two opposite inner sides of the casing and extend from opening 76 downwards.

Figures 2 and 6 illustrate one of the two guiding members denoted 77, the second one (not represented in the drawings) being symmetrical with respect to a vertical plane containing longitudinal axis X.

When the ingredient capsule is introduced through opening 76 the flange of the capsule is inserted between the guiding members so as to be guided during its descending movement down to the position represented in Figure 2 within brewing chamber 78.

More particularly, two diametrically opposite portions of the flange are respectively inserted in the two opposite guiding rails and slide in these rails. The dimensions of the rails and flange of the capsule are designed relative to one another in such a manner that the capsule becomes inclined with respect to the direction Z, in the intermediate position, as represented in Figure 2. In particular, the width of each rail (transverse dimension with respect to insertion direction) is preferably greater than the thickness or height of flange 36c covered with closing member 36d.

The two guiding members include two stops respectively that are arranged on the path of the flange of the ingredient capsule.

The two stops, e.g. bumps, are respectively located in the two guiding rails at a height enabling abutment of the capsule against the stops in the intermediate position as represented in Figure 2. The two stops reduce the width that is available in the brewing chamber for the flange to normally freely pass, thereby leading to abutment of the capsule flange against the stops.

Figure 6 illustrates the stop denoted 79 that is located in guiding member 77.

Figure 7 schematically and partly represents perforating plate 74 assembled in second part 70.

More particularly, holding element 72 comprises a central supporting portion 80 against which perforating plate 74 is to be placed and a peripheral portion 82 which extends axially from central portion 80 towards first part 34 of the machine, thereby defining a central housing for accommodating plate 74.

A ring member 84 radially extends from peripheral portion 82 inwardly at an axial distance from supporting portion 80.

Ring member 84 has an inside diameter slightly greater than the outside diameter of plate 74 and is provided with several inner elements on its inner face 84a. Only two of them 84b and 84c are represented in the drawing, whereas for example four elements may be peripherally located on the ring.

Such inner ring elements extend radially and inwardly from the inner face 84a and act each as a ramp for facilitating the introduction of perforating plate in its housing in a direction denoted by arrow F1 in Figure 7.

The insertion through the opened central portion of ring 84 is made possible due to a relative elasticity between ring 84 and perforating plate 74.

When plate 74 is forcibly engaged through ring 84 in the position represented in Figure 7 each inner ring element acts a retaining means in order to prevent plate 74 from being withdrawn in the opposite direction.

Perforating plate 74 is thus snapped fittingly in its housing or seat.

As represented in Figures 7 to 9, plate 74 comprises a plurality of perforating projecting members 90 extending from a surface 91 as well a plurality of beverage evacuation orifices 92 arranged therebetween.

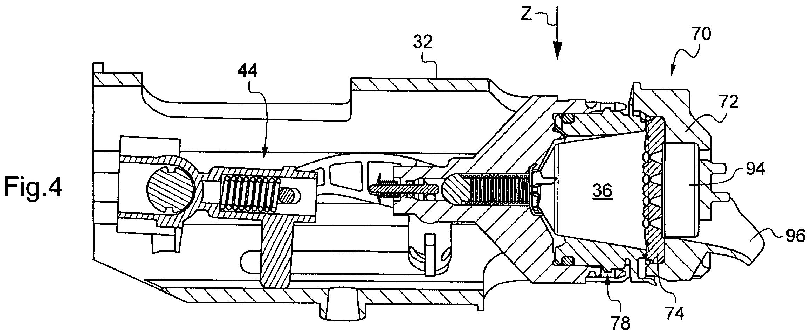

Briefly, in the position represented in Figure 4 ingredient capsule 36 is close to the perforating projecting members 90 of plate 74, e.g. in contact with members 90, and hot water is injected into the capsule under a given pressure in a known manner.

Under the action of the pressure within the capsule the closing member 36d (e.g. a tear face or membrane) deforms and presses against the perforating projecting members 90, thereby leading to tearing of the closing member.

Fluid that is contained in the capsule (e.g. coffee) flows out of the capsule and is permitted to pass through beverage evacuation orifices 92 that open out in a receiving chamber 94 (Figure 4).

Fluid flows from chamber 94 through an exit nozzle 96 and pours down into a cup not represented in the drawings.

As represented in Figure 7 each perforating projecting member 90 has the overall shape of a truncated pyramid. The pyramid extends in an axial direction from a squared base 90a connected to surface 91 to a free end that has a squared surface defined by four linear perforating edges 90b, 90c, 90d and 90e.

The perforating edges lie in a plane parallel to surface 91 and tear the closing member of the ingredient capsule when the latter is pressed against the perforating members as already explained above.

According to other embodiments which are not illustrated here, the perforating projecting members may take other forms such as prisms, cylinders, or frustums of optionally polygonal or circular cross-section.

The Applicant has discovered that it is possible to reduce the risk of trapping of an ingredient capsule by the perforating projecting members during the insertion of the capsule as illustrated in Figures 1a and 1b by suitably arranging the perforating projecting members on the surface 91 with respect to opening 76 and the direction of insertion Z of the capsule.

In particular, the Applicant has noticed that if the perforating projecting members are too spaced apart from each other and/or are oriented in such a way that a space left free by the perforating projecting members in an orientation Y perpendicular to direction Z is too large, then trapping/blocking of the capsule against these members may occur.

The flange 36c of the capsule is also preferably designed with an enlarged end portion, e.g. curled or solid end, that is dimensioned and shaped to reduce its possible introduction in the space left free between the members when the capsule plate is properly oriented.

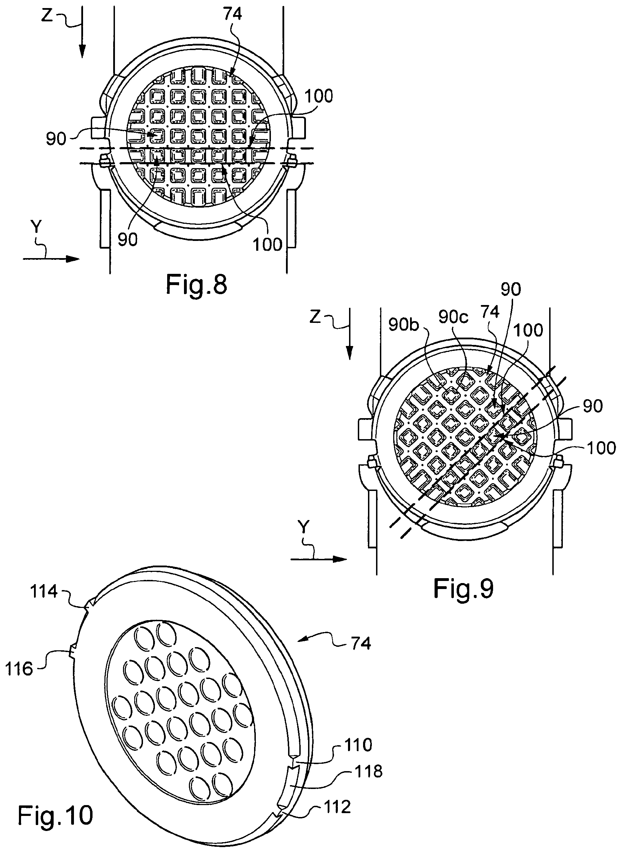

Figure 8 illustrates in a reduced size compared to that of Figure 7 projecting members 90 where the space left free between two consecutive members is small enough to reduce a risk of trapping/blocking of the capsule.

However, the horizontal and vertical orientation of the grid arrangement (members are arranged on the surface 91 so as to form between the members passages that are perpendicular to each other) makes it possible to accommodate a portion of the capsule flange in the horizontal passages 100 denoted by dotted lines (in direction Y) between the members 90 when the capsule is vertically inserted in Z vertical direction.

Figure 9 illustrates an angular orientation of the array arrangement of the perforating projecting members 90 which makes no longer possible to trap the flange of the capsule in passages 100 when the capsule is inserted in Z direction.

Passages 100 are no longer horizontal since plate 74 has been rotated about an axis of rotation perpendicular to plate 74 over an angle of at least 15° with respect to the horizontal line and for example an angle equal to 45°.

Thus, the space left free by the perforating projecting members on surface 91 in the orientation Y perpendicular to the insertion direction Z has been considerably reduced compared to that existing in Figure 8.

This space is thus appropriately dimensioned in the arrangement of Figure 9 so as to reduce the risk of trapping of the capsule.

It is to be noted that the perforating edges of the perforating projecting members which are oriented towards opening 76 (perforating edges 90b and 90c in Figure 9) are arranged at an angle to the Z insertion direction that is less than 90° and preferably less than 75°.

This arrangement of the upwardly oriented perforating edges guarantees that the risk of trapping of an ingredient capsule is reduced.

The above also applies to perforating projecting members of other shapes, such as members with a triangular or diamond-shaped cross-section.

In addition, in order to further reduce the risk of trapping the relative dimensions between the thickness of the flange of the ingredient capsule and the space left free between the perforating projecting members may be adjusted in a suitable manner.

Thus, the thickness of the flange may be increased so as to be greater than the space left free between the perforating projecting members. It is therefore more difficult for the capsule flange to be trapped by the members.

Alternatively, or in a combination with the increased thickness, the dimensions of the space between the perforating projecting members may be reduced, thereby making more difficult trapping of the capsule flange by the members.

Furthermore, the Applicant has added specific means to the existing machines to permanently position or orientate the perforating plate 74 in a predetermined angular position, as for example that illustrated in Figure 9.

Plate 74 and its supporting portion are designed so that plate 74 cannot come back to the position of Figure 8 through inadvertent rotation.

Figures 10 to 12 illustrate positioning means for positioning plate 74 in the above-mentioned predetermined angular position. These means impart a given orientation to plate 74.

In particular, plate 74 is provided with male blocking members and the support of the machine against which plate 74 is mounted is provided with complementary female blocking members, thereby enabling cooperation of male and female members in order to position plate 74 in a given position. This position is different and spaced apart from position of Figure 8.

It is to be noted that alternatively male cooperating members may be disposed on the support whereas female cooperating members may be disposed on the plate.

For instance, male blocking members may take the form of two protruding members disposed on two diametrically opposite sides of plate 74 as represented in Figure 10 and which extend radially and outwardly from the outer periphery 118 of plate 74.

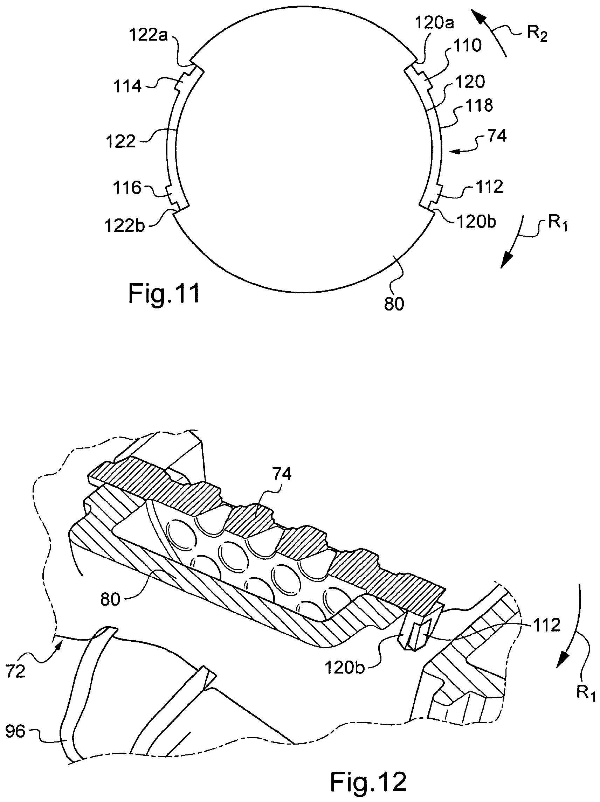

Figure 11 is a back view (taken from left side in figure 7) showing portion 80 of holding element 72 and plate 74 accommodated in its housing and placed behind supporting portion 80.

The two protruding members (e.g. two indents) in each pair of protruding members 110, 112 and 114, 116 are angularly offset from each other and each pair is arranged within a recess provided on portion 80.

For example, each of the two recesses 120, 122 is radially and inwardly formed and has an angular extension greater than the angular space between two protruding members in each pair.

The angular extension of each recess is bounded by two radial edges denoted 120a and 120b for recess 120 and 122a and 122b for recess 122.

As represented in Figure 12 which is a partial view in perspective of plate 74 disposed against portion 80, protruding member 112 comes into contact with edge 120b following a slight rotation of plate 74 within its housing. Edge 120b acts as a stop which prevents any further rotation in the direction of rotation R1.

Edge 120a illustrated in Figure 11 acts in the same way with respect to protruding member 110 to block rotation of plate 74 in the opposite direction of rotation denoted R2.

Edges 120a and 120b within recess 120 (resp. edges 122a and 122b within recess 122) are female blocking members which mechanically cooperate with protruding members 110, 112 (resp. 114, 116).

The predetermined angular range around the predetermined angular position of plate 74 (magnitude of the rotation of plate 74) may be defined by the angular space between the two opposite edges in each recess and the angular offset between the two protruding members in each pair.

Other forms of male and female cooperating members may be envisaged to carry out the same above-mentioned function and possibly with an inverted disposition with respect to the plate and supporting portion.

For example, supporting portion 80 may be equipped with two diametrically opposite protruding members and plate 74 may be provided with two diametrically opposite recesses or grooves.

## Claims

1. A beverage machine comprising a casing (32) enclosing:
- a first part (34) for receiving an ingredient capsule therein,
- a second part (70) having a surface (91) that is provided with perforating projecting members (90) facing the first part,
- an opening (76) in the casing enabling the ingredient capsule to be inserted in a direction of insertion (Z) between the first and second parts,
the first and second parts being movable relative to each other along a longitudinal axis (X) perpendicular to the second part surface between two positions, a first position in which the first and second parts are spaced apart so that the ingredient capsule is inserted therebetween and a second position in which the first and second parts are close to each other so that the ingredient capsule received in the first part is in contact with the perforating projecting members, the insertion direction (Z) being substantially perpendicular to the longitudinal axis, the perforating projecting members (90) are provided in an arrangement on the surface of the second part with respect to the opening (76) so as to permanently reduce the risk of trapping of the ingredient capsule in a non-desired position by the perforating projecting members during the insertion of the ingredient capsule,
wherein the perforating projecting members (90) have each several perforating edges (90b-d) lying in a plane parallel to the surface of the second part, the perforating edges of the perforating projecting members which are oriented towards the opening being arranged at an angle to the insertion direction that is less than 90° when viewed in the plane where the perforating edges lie,
wherein the second part (70) comprises a plate (74) having the surface (91) provided with the perforating projecting members (90), and that is able to rotate about an axis perpendicular to the surface, **characterized in that** the machine comprising positioning means (110, 112, 114, 116, 120, 122) for positioning the surface (91) of the plate (74) in a predetermined angular position where the arrangement of the perforating projecting members enables permanent reduction of the risk of trapping of the ingredient capsule by the perforating projecting members during the insertion of the ingredient capsule and **in that** the plate is mounted against a support and positioning means comprise male cooperating means (110, 112, 114, 116) and female cooperating means (120, 122) on the support and the plate to prevent the plate from being significantly rotated from the predetermined angular position.

2. Beverage machine according to claim 1, **characterized in that** the angle is less than 75°.

3. Beverage machine according to any preceding claim, **characterized in that** the arrangement is in the form of a grid.

4. Beverage machine according to any preceding claim, **characterized in that** the perforating projecting members (90) are truncated pyramids extending each from a base (90a) connected to the surface to a free end that has a squared surface defined by four linear perforating edges (90b-d).

5. Beverage machine according to the preceding claim, **characterized in that** the positioning means (110, 112, 114, 116, 120, 122) allow the surface to be slightly rotated around the predetermined angular position.

6. Beverage machine according to any preceding claim, **characterized in that** the part selected among the first and second parts and that is movable relative to the other part is displaced according to a rectilinear path along the longitudinal axis.

7. Beverage machine according to the preceding claim, **characterized in that** the first part that receives an ingredient capsule is mobile whereas the second part is in a fixed position.

8. A set comprising a beverage machine (30) and an ingredient capsule (36) having side and bottom walls defining a container that is filled with ingredients and closed by a closing member (36d), the ingredient capsule having a flange (36c) extending laterally from side wall, the beverage machine comprising a casing (32) enclosing :
- a first part (34) for receiving an ingredient capsule therein,
- a second part (70) having a surface (91) that is provided with perforating projecting members (90) facing the first part and having guiding members (77) for guiding the ingredient capsule,
- an opening (76) in the casing enabling the ingredient capsule to be inserted in a direction of insertion (Z) between the first and second parts while the flange of the ingredient capsule is guided by the guiding members,
wherein the first and second parts being movable relative to each other along a longitudinal axis perpendicular to the second part surface between two positions, a first position in which the first and second parts are spaced apart so that the ingredient capsule is inserted therebetween and a second position in which the first and second parts are close to each other so that the ingredient capsule received in the first part is in contact with the perforating projecting members, the insertion direction being substantially perpendicular to the longitudinal axis, wherein the perforating projecting members (90) are provided in an arrangement on the surface of the second part with respect to the opening so as to permanently reduce the risk of trapping of the flange of the ingredient capsule in a non-desired position by the perforating projecting members during the insertion of the ingredient capsule,
wherein the perforating projecting members (90) have each several perforating edges (90b-d) lying in a plane parallel to the surface of the second part, the perforating edges of the perforating projecting members which are oriented towards the opening being arranged at an angle to the insertion direction that is less than 90° when viewed in the plane where the perforating edges lie,
wherein the second part (70) comprises a plate (74) having the surface (91) provided with the perforating projecting members (90), and that is able to rotate about an axis perpendicular to the surface, **characterized in that** the machine comprising positioning means (110, 112, 114, 116, 120, 122) for positioning the surface (91) of the plate (74) in a predetermined angular position where the arrangement of the perforating projecting members enables permanent reduction of the risk of trapping of the ingredient capsule by the perforating projecting members during the insertion of the ingredient capsule and **in that** the plate is mounted against a support and positioning means comprise male cooperating means (110, 112, 114, 116) and female cooperating means (120, 122) on the support and the plate to prevent the plate from being significantly rotated from the predetermined angular position.

## Patentansprüche

1. Getränkeautomat, umfassend ein Gehäuse (32), das umschließt:
- einen ersten Teil (34) zur Aufnahme einer Inhaltsstoffkapsel darin,
- einen zweiten Teil (70) mit einer Oberfläche (91), die mit vorstehenden Perforationselementen (90) versehen ist, die dem ersten Teil zugewandt sind,
- eine Öffnung (76) in dem Gehäuse, die es ermöglicht, die Inhaltsstoffkapsel in einer Einführungsrichtung (Z) zwischen dem ersten und zweiten Teil einzusetzen,
wobei die ersten und zweiten Teile entlang einer Längsachse (X), die senkrecht zur Oberfläche des zweiten Teils verläuft, zwischen zwei Positionen relativ zueinander beweglich sind, einer ersten Position, in der die ersten und zweiten Teile so beabstandet sind, dass die Inhaltsstoffkapsel dazwischen eingesetzt wird, und einer zweiten Position, in der die ersten und zweiten Teile nahe beieinander liegen, sodass die im ersten Teil aufgenommene Inhaltsstoffkapsel in Kontakt mit den vorstehenden Perforationselementen steht, wobei sich die Einführungsrichtung (Z) im Wesentlichen senkrecht zur Längsachse befindet, wobei die vorstehenden Perforationselemente (90) in einer Anordnung auf der Oberfläche des zweiten Teils in Bezug auf die Öffnung (76) bereitgestellt werden, um das Risiko des Verfangens der Inhaltsstoffkapsel in einer unerwünschten Position durch die vorstehenden Perforationselemente beim Einsetzen der Inhaltsstoffkapsel dauerhaft zu reduzieren,
wobei die vorstehenden Perforationselemente (90) jeweils mehrere Perforationskanten (90b-d) aufweisen, die in einer Ebene parallel zur Oberfläche des zweiten Teils liegen, wobei die Perforationskanten der vorstehenden Perforationselemente, die auf die Öffnung ausgerichtet sind, in einem Winkel zur Einführungsrichtung angeordnet sind, der aus Sicht aus der Ebene, in der die Perforationskanten liegen, weniger als 90° beträgt,
wobei der zweite Teil (70) eine Platte (74) mit der Oberfläche (91) umfasst, die mit den vorstehenden Perforationselementen (90) versehen ist, und die sich um eine Achse senkrecht zur Oberfläche drehen kann, **dadurch gekennzeichnet, dass** der Automat Positioniermittel (110, 112, 114, 116, 120, 122) zum Positionieren der Oberfläche (91) der Platte (74) in eine vorgegebene Winkelposition umfasst, wobei die Anordnung der vorstehenden Perforationselemente eine dauerhafte Reduzierung des Risikos des Verfangens der Inhaltsstoffkapsel durch die vorstehenden Perforationselemente beim Einsetzen der Inhaltsstoffkapsel ermöglicht, und **dadurch, dass** die Platte an einem Träger montiert ist und Positioniermittel Einsteck-Anschlussmittel (110, 112, 114, 116) und Aufnahme-Anschlussmittel (120, 122) auf dem Träger und der Platte umfassen, um eine wesentliche Drehung der Platte aus der vorgegebenen Winkelposition zu verhindern.

2. Getränkeautomat nach Anspruch 1, **dadurch gekennzeichnet, dass** der Winkel kleiner als 75° ist.

3. Getränkeautomat nach einem vorstehenden Anspruch, **dadurch gekennzeichnet, dass** die Anordnung in Form eines Gitters vorliegt.

4. Getränkeautomat nach einem vorstehenden Anspruch, **dadurch gekennzeichnet, dass** es sich bei den vorstehenden Perforationselementen (90) um Pyramidenstümpfe handelt, die jeweils von einer mit der Oberfläche verbundenen Basis (90a) bis zu einem freien Ende reichen, das eine quadratische Oberfläche aufweist, die durch vier lineare Perforationskanten (90b-d) definiert ist.

5. Getränkeautomat nach dem vorstehenden Anspruch, **dadurch gekennzeichnet, dass** die Positioniermittel (110, 112, 114, 116, 120, 122) eine leichte Drehung der Oberfläche um die vorgegebene Winkelposition ermöglichen.

6. Getränkeautomat nach einem vorstehenden Anspruch, **dadurch gekennzeichnet, dass** der aus dem ersten und zweiten Teil ausgewählte Teil, der relativ zum anderen Teil beweglich ist, geradlinig entlang der Längsachse verschoben wird.

7. Getränkeautomat nach dem vorstehenden Anspruch, **dadurch gekennzeichnet, dass** der erste Teil, der eine Inhaltsstoffkapsel aufnimmt, beweglich ist, wohingegen sich der zweite Teil in einer festen Position befindet.

8. System, umfassend einen Getränkeautomat (30) und eine Inhaltsstoffkapsel (36) mit Seiten- und Bodenwänden, die einen Behälter bilden, der mit Inhaltsstoffen gefüllt und durch ein Verschlusselement (36d) verschlossen wird, wobei die Inhaltsstoffkapsel einen Flansch (36c) aufweist, der seitlich von der Seitenwand aus verläuft, wobei der Getränkeautomat ein Gehäuse (32) umfasst, das umschließt:
- einen ersten Teil (34) zur Aufnahme einer Inhaltsstoffkapsel darin,
- einen zweiten Teil (70) mit einer Oberfläche (91), die mit vorstehenden Perforationselementen (90) versehen ist, die dem ersten Teil zugewandt sind und Führungselemente (77) zum Führen der Inhaltsstoffkapsel aufweisen,
- eine Öffnung (76) in dem Gehäuse, die es ermöglicht, die Inhaltsstoffkapsel in einer Einführungsrichtung (Z) zwischen dem ersten und zweiten Teil einzusetzen, während der Flansch der Inhaltsstoffkapsel von den Führungselementen gelenkt wird,
wobei die ersten und zweiten Teile entlang einer Längsachse, die senkrecht zur Oberfläche des zweiten Teils verläuft, zwischen zwei Positionen relativ zueinander beweglich sind, einer ersten Position, in der die ersten und zweiten Teile so beabstandet sind, dass die Inhaltsstoffkapsel dazwischen eingesetzt wird, und einer zweiten Position, in der die ersten und zweiten Teile nahe beieinander liegen, sodass die im ersten Teil aufgenommene Inhaltsstoffkapsel in Kontakt mit den vorstehenden Perforationselementen steht, wobei sich die Einführungsrichtung im Wesentlichen senkrecht zur Längsachse befindet, wobei die vorstehenden Perforationselemente (90) in einer Anordnung auf der Oberfläche des zweiten Teils in Bezug auf die Öffnung bereitgestellt werden, um das Risiko des Verfangens des Flansches der Inhaltsstoffkapsel in einer unerwünschten Position durch die vorstehenden Perforationselemente beim Einsetzen der Inhaltsstoffkapsel dauerhaft zu reduzieren,
wobei die vorstehenden Perforationselemente (90) jeweils mehrere Perforationskanten (90b-d) aufweisen, die in einer Ebene parallel zur Oberfläche des zweiten Teils liegen, wobei die Perforationskanten der vorstehenden Perforationselemente, die auf die Öffnung ausgerichtet sind, in einem Winkel zur Einführungsrichtung angeordnet sind, der aus Sicht aus der Ebene, in der die Perforationskanten liegen, weniger als 90° beträgt,
wobei der zweite Teil (70) eine Platte (74) mit der Oberfläche (91) umfasst, die mit den vorstehenden Perforationselementen (90) versehen ist, und die sich um eine Achse senkrecht zur Oberfläche drehen kann, **dadurch gekennzeichnet, dass** der Automat Positioniermittel (110, 112, 114, 116, 120, 122) zum Positionieren der Oberfläche (91) der Platte (74) in eine vorgegebene Winkelposition umfasst, wobei die Anordnung der vorstehenden Perforationselemente eine dauerhafte Reduzierung des Risikos des Verfangens der Inhaltsstoffkapsel durch die vorstehenden Perforationselemente beim Einsetzen der Inhaltsstoffkapsel ermöglicht, und **dadurch**, **dass** die Platte an einem Träger montiert ist und Positioniermittel Einsteck-Anschlussmittel (110, 112, 114, 116) und Aufnahme-Anschlussmittel (120, 122) auf dem Träger und der Platte umfassen, um eine wesentliche Drehung der Platte aus der vorgegebenen Winkelposition zu verhindern.

## Revendications

1. Machine à boisson comprenant un boîtier (32) enfermant :
- une première partie (34) pour recevoir une capsule d'ingrédient en son sein,
- une deuxième partie (70) ayant une surface (91) qui est pourvue d'éléments en saillie de perforation (90) faisant face à la première partie,
- une ouverture (76) dans le boîtier permettant à la capsule d'ingrédient d'être insérée dans une direction d'insertion (Z) entre les première et deuxième parties,
les première et deuxième parties étant mobiles l'une par rapport à l'autre le long d'un axe longitudinal (X) perpendiculaire à la surface de deuxième partie entre deux positions, une première position dans laquelle les première et deuxième parties sont espacées de sorte que la capsule d'ingrédient est insérée entre elles et une deuxième position dans laquelle les première et deuxième parties sont proches l'une de l'autre de sorte que la capsule d'ingrédient reçue dans la première partie est en contact avec les éléments en saillie de perforation, la direction d'insertion (Z) étant essentiellement perpendiculaire à l'axe longitudinal, les éléments en saillie de perforation (90) sont fournis dans un agencement sur la surface de la deuxième partie par rapport à l'ouverture (76) de façon à réduire de manière permanente le risque de piégeage de la capsule d'ingrédient dans une position non souhaitée par les éléments en saillie de perforation pendant l'insertion de la capsule d'ingrédient,
dans laquelle les éléments en saillie de perforation (90) ont chacun plusieurs bords de perforation (90b-d) se trouvant dans un plan parallèle à la surface de la deuxième partie, les bords de perforation des éléments en saillie de perforation qui sont orientés vers l'ouverture étant agencés selon un angle par rapport à la direction d'insertion qui est inférieur à 90° lorsqu'on observe dans le plan où se trouvent les bords de perforation,
dans laquelle la deuxième partie (70) comprend une plaque (74) ayant la surface (91) pourvue des éléments en saillie de perforation (90), et qui peut tourner autour d'un axe perpendiculaire à la surface, **caractérisée en ce que** la machine comprend des moyens de positionnement (110, 112, 114, 116, 120, 122) pour positionner la surface (91) de la plaque (74) dans une position angulaire prédéterminée où l'agencement des éléments en saillie de perforation permet une réduction permanente du risque de piégeage de la capsule d'ingrédient par les éléments en saillie de perforation pendant l'insertion de la capsule d'ingrédient **et en ce que** la plaque est montée contre un support et les moyens de positionnement comprennent des moyens de coopération mâles (110, 112, 114, 116) et des moyens de coopération femelles (120, 122) sur le support et la plaque pour empêcher la plaque d'être significativement tournée à partir de la position angulaire prédéterminée.

2. Machine à boisson selon la revendication 1, **caractérisée en ce que** l'angle est inférieur à 75°.

3. Machine à boisson selon une quelconque revendication précédente, **caractérisée en ce que** l'agencement est sous la forme d'une grille.

4. Machine à boisson selon une quelconque revendication précédente, **caractérisée en ce que** les éléments en saillie de perforation (90) sont des pyramides tronquées s'étendant chacune à partir d'une base (90a) reliée à la surface à une extrémité libre qui a une surface carrée définie par quatre bords de perforation linéaires (90b-d).

5. Machine à boisson selon la revendication précédente, **caractérisée en ce que** les moyens de positionnement (110, 112, 114, 116, 120, 122) permettent à la surface d'être légèrement tournée autour de la position angulaire prédéterminée.

6. Machine à boisson selon une quelconque revendication précédente, **caractérisée en ce que** la partie sélectionnée parmi les première et deuxième parties et qui est mobile par rapport à l'autre partie est déplacée selon une trajectoire rectiligne le long de l'axe longitudinal.

7. Machine à boisson selon la revendication précédente, **caractérisée en ce que** la première partie qui reçoit une capsule d'ingrédient est mobile alors que la deuxième partie est dans une position fixe.

8. Ensemble comprenant une machine à boisson (30) et une capsule d'ingrédient (36) ayant des parois latérale et inférieure définissant un contenant qui est rempli d'ingrédients et fermé par un élément de fermeture (36d), la capsule d'ingrédient ayant un rebord (36c) s'étendant latéralement à partir de la paroi latérale, la machine à boisson comprenant un boîtier (32) enfermant :
- une première partie (34) pour recevoir une capsule d'ingrédient en son sein,
- une deuxième partie (70) ayant une surface (91) qui est pourvue d'éléments en saillie de perforation (90) faisant face à la première partie et ayant des éléments de guidage (77) pour guider la capsule d'ingrédient,
- une ouverture (76) dans le boîtier permettant à la capsule d'ingrédient d'être insérée dans une direction d'insertion (Z) entre les première et deuxième parties alors que le rebord de la capsule d'ingrédient est guidé par les éléments de guidage,
dans lequel les première et deuxième parties sont mobiles l'une par rapport à l'autre le long d'un axe longitudinal perpendiculaire à la surface de deuxième partie entre deux positions, une première position dans laquelle les première et deuxième parties sont espacées de sorte que la capsule d'ingrédient est insérée entre elles et une deuxième position dans laquelle les première et deuxième parties sont proches l'une de l'autre de sorte que la capsule d'ingrédient reçue dans la première partie est en contact avec les éléments en saillie de perforation, la direction d'insertion étant essentiellement perpendiculaire à l'axe longitudinal, dans lequel les éléments en saillie de perforation (90) sont fournis dans un agencement sur la surface de la deuxième partie par rapport à l'ouverture de façon à réduire de manière permanente le risque de piégeage du rebord de la capsule d'ingrédient dans une position non souhaitée par les éléments en saillie de perforation pendant l'insertion de la capsule d'ingrédient,
dans lequel les éléments en saillie de perforation (90) ont chacun plusieurs bords de perforation (90b-d) se trouvant dans un plan parallèle à la surface de la deuxième partie, les bords de perforation des éléments en saillie de perforation qui sont orientés vers l'ouverture étant agencés selon un angle par rapport à la direction d'insertion qui est inférieur à 90° lorsqu'on observe dans le plan où se trouvent les bords de perforation,
dans lequel la deuxième partie (70) comprend une plaque (74) ayant la surface (91) pourvue des éléments en saillie de perforation (90), et qui peut tourner autour d'un axe perpendiculaire à la surface, **caractérisé en ce que** la machine comprend des moyens de positionnement (110, 112, 114, 116, 120, 122) pour positionner la surface (91) de la plaque (74) dans une position angulaire prédéterminée où l'agencement des éléments en saillie de perforation permet une réduction permanente du risque de piégeage de la capsule d'ingrédient par les éléments en saillie de perforation pendant l'insertion de la capsule d'ingrédient **et en ce que** la plaque est montée contre un support et les moyens de positionnement comprennent des moyens de coopération mâles (110, 112, 114, 116) et des moyens de coopération femelles (120, 122) sur le support et la plaque pour empêcher la plaque d'être significativement tournée à partir de la position angulaire prédéterminée.
